# EUROPEAN PATENT SPECIFICATION

(11) **EP 4 208 742 B1**
(45) Date of publication and mention of the grant of the patent: **09.12.2026**
(21) Application number: 20800609.8
(22) Date of filing: 29.10.2020
(51) Int. Cl.: G02B 1/118, G02B 5/30

(54) **MULTIFUNCTIONAL FILM FOR DISPLAY STACK AND APPARATUS COMPRISING SUCH DISPLAY STACK**
MULTIFUNKTIONALE FOLIE FÜR ANZEIGESTAPEL UND VORRICHTUNG MIT SOLCH EINEM ANZEIGESTAPEL
FILM MULTIFONCTIONNEL POUR DALLE D'AFFICHAGE ET APPAREIL COMPRENANT UN TEL EMPILEMENT D'AFFICHAGE

(43) Date of publication of application: 12.07.2023
(73) Proprietor: Huawei Technologies Co., Ltd., Shenzhen, Guangdong 518129 (CN)
(72) Inventor: KHACHATRYAN, Hayk, 16440 Kista (SE); GANDHI, Vishal, 16440 Kista (SE)
(74) Representative: Gill Jennings & Every LLP
(86) International application number: PCT/EP2020/080433
(87) International publication number: WO 2022/089750

(56) References cited:
- WO-A1-2011/109287
- US-A1- 2012 008 207
- US-A1- 2013 285 539
- US-A1- 2014 078 582
- US-A1- 2014 293 196
- US-A1- 2016 077 240

## Description

### TECHNICAL FIELD

The disclosure relates to a film for a display stack, a display stack, and an apparatus provided with such a display stack.

### BACKGROUND

Display stacks for mobile devices face a number of problems related to incoming ambient light and/or backlight. Incoming ambient light, e.g. sunlight, is usually reflected from the display stack's outer cover layer and/or other internal layers, creating glare which obstructs the actual image shown by the display panel of the display stack. A multilayer antireflection coating can be directly coated, or laminated by means of optically clear adhesive, on top of the cover layer in order to reduce such reflections.

Furthermore, multilayer polarizers can be used to block any internally reflected ambient light, or to change the polarization of light emitted by a backlight unit to a desired polarization. A polarizer conventionally comprises several layers of film, one layer being a polarizer layer and several other layers providing mechanical support and environmental protection. Such a polarizer is laminated, by means of optically clear adhesive, onto the bottom of the cover layer. Such conventional polarizers are relatively thick, and, considering advancements in display technology, far too stiff, rigid, difficult to process, as well as expensive. Furthermore, conventional polarizers require a separate process step in the display stack assembly process.

US 2014/293196 A1 discloses a structure comprising a polarizing element and an anti-reflective element.

US2014078582A1 discloses an optical unit.

WO2011109287A1 discloses nano-structured articles having a random nano-structured anisotropic major surface.

US2013285539A1 discloses a flat panel display device that includes a transparent display panel including a transparent area transmitting light incident on one surface of the transparent display panel to the other surface opposite to the one surface; a first anti-reflective film which is formed over the one surface of the transparent display panel and has a moth eye structure; and a second anti-reflective film which is formed over the other surface of the transparent display panel and has a moth eye structure.

US2016077240A1 provides a antireflective film which includes a plastic substrate; a infiltration layer; a antireflective layer including a binder resin and particles with an average primary particle diameter of 50 nm to 700 nm, in this order in an adjacent manner, in which the antireflective layer has moth-eye structures formed by the particles on the surface opposite to the infiltration layer.

US2012008207A1 provides a polarizer comprising a subwavelength optical microstructure wherein the microstructure is partially covered with a light-transmissive inhibiting surface for polarizing light.

### SUMMARY

It is an object to provide an improved and multifunctional film for a display stack. The foregoing and other objects are achieved by the features of the independent claim.

Further implementation forms are apparent from the dependent claims, the description, and the figures.

According to a first aspect, there is provided a multifunctional film for a display stack in accordance with appended claim 1.

Such a multifunctional film allows several assembly process steps to be disregarded, since the antireflection element and the polarizer element are integrated into one film. Furthermore, the inbuilt multifunctionality of the film reduces the need for additional layers of optically clear adhesive, allowing the display stack to be made thinner and less stiff, while still being robust and durable.

In a possible implementation form of the first aspect, the substrate is a single-piece substrate, allowing the number of assembly process steps for the display stack to be significantly reduced.

In a further possible implementation form of the first aspect, there are no intermediate layers between the substrate and the polarizer element or between the substrate and the antireflection element, allowing the film to be made as thin as possible.

The antireflection element is arranged adjacent to a first surface of the substrate, and the polarizer element is arranged adjacent to a second surface of the substrate, the second surface extending in parallel with the first surface, the first surface and the second surface being separated by a first thickness, allowing the film to be multifunctional.

The antireflection element is embedded within the substrate at a first distance from the first surface, the first distance corresponding to a maximum of 1 % of the first thickness, and/or the polarizer element is embedded within the substrate at a second distance from the second surface corresponding to a maximum of 1 % of the first thickness, providing the desired functionality while at the same time being sufficiently integrated with the substrate of the film.

In a further possible implementation form of the first aspect, the first distance and/or the second distance is 0-2 µm.

In a further possible implementation form of the first aspect, the first thickness is 100-650 µm, the antireflection element has a second thickness of 0.5-10 µm, and/or the polarizer element has a third thickness of 0.5-10 µm.

In a further possible implementation form of the first aspect, the substrate comprises at least one of glass and polymer material, being conventional cover layer materials.

The antireflection element comprises a nanostructure, the nanostructure having a period smaller than the wavelength of visible light. By making the period smaller than the wavelength of the light, the light remains insensitive to the structures and tends to bend progressively, which is equivalent to passing through a homogenous medium.

The nanostructure comprises at least one of a nanopillar, nanowire, paraboloidal, nanonipple, nanodome, nanocylinder, nanopyramide, and moth eye structure.

In a further possible implementation form of the first aspect, the nanostructure comprises at least one of SiO₂, TiO₂, PDMS, silicone-based polymers, Si, GaN, Sapphire, MgF₂/SiO₂, Ag, ZnO, and Au.

In a further possible implementation form of the first aspect, the polarizer element comprises a circular polarizer, preferably a combination of a linear polarizer and a quarter wave plate, allowing unpolarized light to be transformed to circularly polarized light.

According to a second aspect, there is provided a display stack comprising a display panel and a multifunctional film according to the above in accordance with appended claim 8.

A display stack comprising a multifunctional film allows several assembly process steps to be disregarded, and reduces the need for additional layers of optically clear adhesive, allowing the display stack to be made thinner and less stiff. The display panel is protected by the substrate of the multifunctional film, while the other functionalities of the film provide antireflection and polarization.

In a possible implementation form of the second aspect, the multifunctional film is a layer separate from a cover layer of the display stack, providing additional protection for the display panel.

In a further possible implementation form of the second aspect, the multifunctional film is comprised within a cover layer of the display stack, the substrate of the multifunctional film forming a protective surface of the display stack. This allows the height of the display stack to be minimized.

In a further possible implementation form of the second aspect, the first surface of the multifunctional film is configured to face a user of an apparatus comprising the display stack, and the second surface of the multifunctional film is configured to face the display panel.

In a further possible implementation form of the second aspect, the display panel comprises a plurality of adjoining sub-layers, the sub-layers comprising at least one of a display layer, a sensor layer, a touch sensor layer, and an adhesive layer, such an integration allowing several assembly process steps to be disregarded.

According to a third aspect, there is provided an apparatus comprising the display stack according to the above in accordance with appended claim 14, the apparatus comprising an as thin as possible yet functional display stack. These and other aspects will be apparent from the embodiments described below.

### BRIEF DESCRIPTION OF THE DRAWINGS

In the following detailed portion of the present disclosure, the aspects, embodiments and implementations will be explained in more detail with reference to the example embodiments shown in the drawings, in which:
Fig. 1 shows a schematic side view of a multifunctional film according to a comparative example;
Fig. 2 shows a schematic side view of a multifunctional film according to a further comparative example;
Fig. 3 shows a schematic side view of a multifunctional film according to a further comparative example;
Fig. 4 shows a schematic side view of a multifunctional film according to an embodiment of the present invention;
Fig. 5 shows a schematic side view of a multifunctional film according to a further comparative example;
Fig. 6 shows a schematic side view of a display stack according to an embodiment of the present invention.

### DETAILED DESCRIPTION

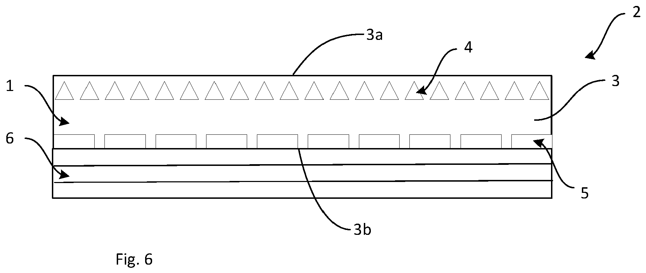

The present invention relates to an apparatus comprising a display stack 2, as shown in Fig. 6. The apparatus may be any kind of apparatus comprising a display stack, e.g. a television, a monitor, a tablet, a smartphone, or a wearable.

The display stack 2 comprises a display panel 6 and a multifunctional film 1 which is described in more detail further below. The display panel 6 may, e.g., be an OLED, AMOLED, LCD, or µLCD display layer. The display panel 6 may comprise a plurality of adjoining sub-layers, the sub-layers comprising e.g. at least one of a display layer, a sensor layer, a touch sensor layer, and an adhesive layer.

The multifunctional film 1 comprises a substrate 3, an antireflection element 4, and a polarizer element 5. The polarizer element 5 and the antireflection element 4 are embedded within the substrate 3.

In one embodiment, there are no intermediate layers between the cover layer and the polarizer element 5, or between the cover layer and the antireflection element 4.

The multifunctional film 1 may be a layer separate from the cover layer of the display stack 2, and arranged anywhere within the display stack 2 independently of the cover layer. The multifunctional film 1 may also be comprised within the cover layer of the display stack 2, such that the substrate 3 of the multifunctional film 1 forms the protective surface of the display stack 2.

As shown in Fig. 6, the antireflection element 4 is arranged adjacent to a first surface 3a of the substrate 3, and the polarizer element 5 is arranged adjacent to a second surface 3b of the substrate 3. The second surface 3b extends in parallel with the first surface 3a, and the first surface 3a and the second surface 3b are separated by a first thickness T1.

The first surface 3a of the multifunctional film 1 may be configured to face a user of an apparatus comprising the display stack 2, and the second surface 3b of the multifunctional film 1 may be configured to face the display panel 6.

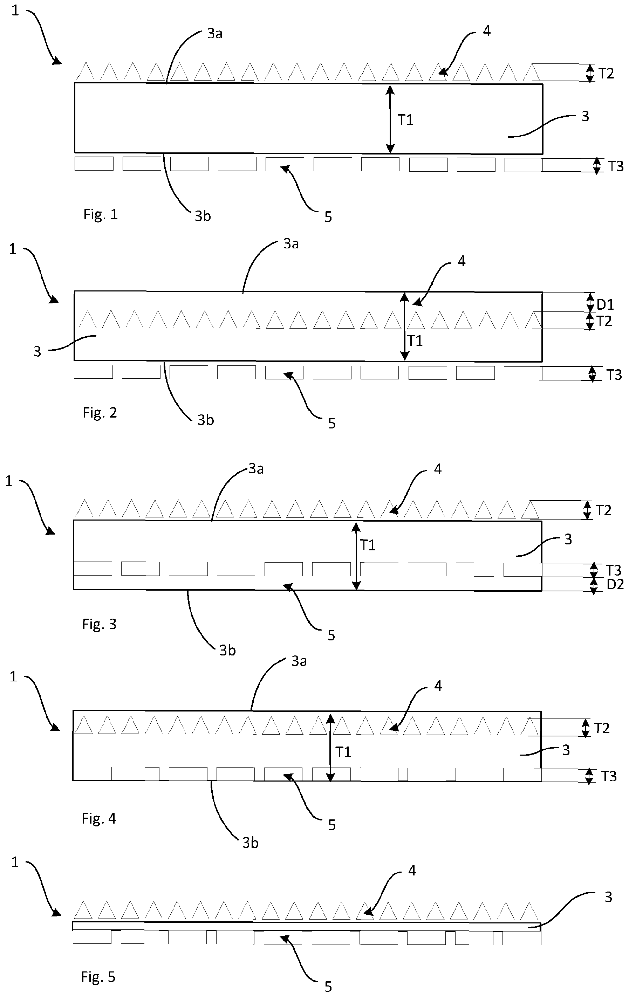

In accordance with a comparative example, Fig. 1 shows a substrate 3, an antireflection element 4 disposed directly onto the first surface 3a of the substrate 3, and a polarizer element 5 disposed directly onto the second surface 3b of the substrate 3.

In accordance with a comparative example, Fig. 2 shows a substrate 3, an antireflection element 4 embedded within the substrate 3, adjacent the first surface 3a of the substrate 3, and a polarizer element 5 disposed directly onto the second surface 3b of the substrate 3.

In accordance with a comparative example, Fig. 3 shows a substrate 3, an antireflection element 4 disposed directly onto the first surface 3a of the substrate 3, and a polarizer element 5 embedded within the substrate 3, adjacent the second surface 3b of the substrate 3.

In accordance with the claimed invention, Fig. 4 shows a substrate 3, an antireflection element 4 embedded within the substrate 3, adjacent the first surface 3a of the substrate 3, and a polarizer element 5 embedded within the substrate 3, adjacent the second surface 3b of the substrate 3.

The antireflection element 4 is embedded within the substrate 3 at a first distance D1 from the first surface 3a, as shown in Fig. 2. The first distance D1 corresponds to a maximum of 1 % of the first thickness T1.

Correspondingly, the polarizer element 5 is embedded within the substrate 3 at a second distance D2 from the second surface 3b, as shown in Fig. 3. The second distance D2 corresponds to a maximum of 1 % of the first thickness T1. The first distance D1 and/or the second distance D2 may be 0-2 µm.

The first thickness T1 may be 100-650 µm, the antireflection element 4 may have a second thickness T2 of 0.5-10 µm, and/or the polarizer element 5 may have a third thickness T3 of 0.5-10 µm.

The substrate 3 may be a single-piece substrate, comprising only one component and/or material. The substrate 3 may comprise at least one of glass and polymer material.

The antireflection element 4 comprises a nanostructure, the nanostructure having a period smaller than the wavelength of visible light. The nanostructure comprises at least one of a nanopillar, nanowire, paraboloidal, nanonipple, nanodome, nanocylinder, nanopyramid, and moth eye structure. Furthermore, the nanostructure may comprise at least one of SiO2, TiO2, PDMS, silicone-based polymers, Si, GaN, Sapphire, MgF2/SiO2, Ag, ZnO, and Au. The nanostructures may be manufactured using e.g. nano lithography, hot embossing, roll-to-roll (R2R) well-coating methods or similar.

The polarizer element 5 may comprise a circular polarizer, preferably a combination of a linear polarizer and a quarter wave plate. The polarizer element 5 may be a wire grid polarizer. A wire-grid polarizer converts an unpolarized beam into a beam having single linear polarization. The wire grid linear polarizer, when combined with a quarter wave plate, forms a circular polarizer. Unpolarized light first travels through the linear polarizer, which only transmit the light oscillating parallel to the linear polarizer axis. After passing through the linear polarizer, the light becomes linearly polarized. Next, the linearly polarized light passes through the quarter wave plate, which changes the polarization of the linearly polarized light to circularly polarized light.

The various aspects and implementations have been described in conjunction with various embodiments herein. However, other variations to the disclosed embodiments can be understood and effected by those skilled in the art in practicing the claimed subject-matter, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage.

The reference signs used in the claims shall not be construed as limiting the scope. Unless otherwise indicated, the drawings are intended to be read (e.g., cross-hatching, arrangement of parts, proportion, degree, etc.) together with the specification, and are to be considered a portion of the entire written description of this disclosure. As used in the description, the terms "horizontal", "vertical", "left", "right", "up" and "down", as well as adjectival and adverbial derivatives thereof (e.g., "horizontally", "rightwardly", "upwardly", etc.), simply refer to the orientation of the illustrated structure as the particular drawing figure faces the reader. Similarly, the terms "inwardly" and "outwardly" generally refer to the orientation of a surface relative to its axis of elongation, or axis of rotation, as appropriate.

## Claims

1. A multifunctional film (1) for a display stack (2), said multifunctional film (1) comprising
- a substrate (3),
- an antireflection element (4), and
- a polarizer element (5), wherein
said antireflection element (4) is arranged adjacent to a first surface (3a) of said substrate (3), and
wherein said antireflection element (4) comprises a nanostructure, said nanostructure having a period smaller than the wavelength of visible light, and
wherein said nanostructure comprises at least one of a nanopillar, nanowire, paraboloidal, nanonipple, nanodome, nanocylinder, nanopyramid, and moth eye structure,
the multifunctional film (1) being **characterized in that**
said polarizer element (5) and said antireflection element (4) are embedded within said substrate (3), and
said polarizer element (5) is arranged adjacent to a second surface (3b) of said substrate (3), said second surface (3b) extending in parallel with said first surface (3a),
said first surface (3a) and said second surface (3b) being separated by a first thickness (T1),
wherein said antireflection element (4) is embedded within said substrate (3) at a first distance (D1) from said first surface (3a), said first distance (D1) corresponding to a maximum of 1 % of said first thickness (T1), and/or said polarizer element (5) is embedded within said substrate (3) at a second distance (D2) from said second surface (3b) corresponding to a maximum of 1 % of said first thickness (T1).

2. The multifunctional film (1) according to claim 1, wherein said substrate (3) is a single-piece substrate.

3. The multifunctional film (1) according to any one of the previous claims, wherein said first distance (D1) and/or said second distance (D2) is 0-2 µm.

4. The multifunctional film (1) according to any one of the previous claims, wherein said first thickness (T1) is 100-650 µm, said antireflection element (4) has a second thickness (T2) of 0.5-10 µm, and/or said polarizer element (5) has a third thickness (T3) of 0.5-10 µm.

5. The multifunctional film (1) according to any one of the previous claims, wherein said substrate (3) comprises at least one of glass and polymer material.

6. The multifunctional film (1) according to any one of the previous claims, wherein said nanostructure comprises at least one of SiO₂, TiO₂, PDMS, silicone-based polymers, Si, GaN, Sapphire, MgF₂/SiO₂, Ag, ZnO, and Au.

7. The multifunctional film (1) according to any one of the previous claims, wherein said polarizer element (5) comprises a circular polarizer, preferably a combination of a linear polarizer and a quarter wave plate.

8. A display stack (2) comprising a display panel (6) and a multifunctional film (1) according to any one of claims 1 to 7.

9. The display stack (2) according to claim 8, wherein said multifunctional film (1) is a layer separate from a cover layer of said display stack (2).

10. The display stack (2) according to claim 8, wherein said multifunctional film (1) is comprised within a cover layer of said display stack (2), the substrate (3) of said multifunctional film (1) forming a protective surface of said display stack (2).

11. The display stack (2) according to any one of claims 8 to 10, wherein the first surface (3a) of said multifunctional film (1) is configured to face a user of an apparatus comprising said display stack (2), and the second surface (3b) of said multifunctional film (1) is configured to face said display panel (6).

12. An apparatus comprising the display stack according to any one of claims 8 to 11.

## Patentansprüche

1. Multifunktionale Folie (1) für einen Anzeigestapel (2), wobei die multifunktionale Folie (1) umfasst:
- ein Substrat (3),
- ein Antireflexionselement (4) und
- ein Polarisatorelement (5), wobei
das Antireflexionselement (4) angrenzend an eine erste Oberfläche (3a) des Substrats (3) angeordnet ist und
wobei das Antireflexionselement (4) eine Nanostruktur umfasst, wobei die Nanostruktur eine Periode aufweist, die kleiner als die Wellenlänge von sichtbarem Lichts ist, und
wobei die Nanostruktur mindestens eine von einer Nanosäulen-, Nanodraht-, Parabol-, Nanonippel-, Nanokuppel-, Nanozylinder-, Nanopyramiden- und Mottenaugenstruktur umfasst,
wobei die multifunktionale Folie (1) **dadurch gekennzeichnet ist, dass** das Polarisatorelement (5) und das Antireflexionselement (4) in dem Substrat (3) eingebettet sind und
das Polarisatorelement (5) angrenzend an eine zweite Oberfläche (3b) des Substrats (3) angeordnet ist, wobei sich die zweite Oberfläche (3b) parallel zu der ersten Oberfläche (3a) erstreckt,
wobei die erste Oberfläche (3a) und die zweite Oberfläche (3b) durch eine erste Dicke (T1) getrennt sind,
wobei das Antireflexionselement (4) innerhalb des Substrats (3) in einem ersten Abstand (D1) von der ersten Oberfläche (3a) eingebettet ist, wobei der erste Abstand (D1) maximal 1 % der ersten Dicke (T1) entspricht, und/oder das Polarisatorelement (5) innerhalb des Substrats (3) in einem zweiten Abstand (D2) von der zweiten Oberfläche (3b) eingebettet ist, der maximal 1 % der ersten Dicke (T1) entspricht.

2. Multifunktionale Folie (1) nach Anspruch 1, wobei das Substrat (3) ein einstückiges Substrat ist.

3. Multifunktionale Folie (1) nach einem der vorstehenden Ansprüche, wobei der erste Abstand (D1) und/oder der zweite Abstand (D2) 0 bis 2 µm beträgt.

4. Multifunktionale Folie (1) nach einem der vorstehenden Ansprüche, wobei die erste Dicke (T1) 100 bis 650 µm beträgt, das Antireflexionselement (4) eine zweite Dicke (T2) von 0,5 bis 10 µm aufweist und/oder das Polarisatorelement (5) eine dritte Dicke (T3) von 0,5 bis 10 µm aufweist.

5. Multifunktionale Folie (1) nach einem der vorstehenden Ansprüche, wobei das Substrat (3) mindestens eines von Glas und Polymermaterial umfasst.

6. Multifunktionale Folie (1) nach einem der vorstehenden Ansprüche, wobei die Nanostruktur mindestens eines von SiO₂, TiO₂, PDMS, silikonbasierten Polymeren. Si, GaN, Saphir. MgF₂/SiO₂, Ag, ZnO und Au umfasst.

7. Multifunktionale Folie (1) nach einem der vorstehenden Ansprüche, wobei das Polarisatorelement (5) einen kreisförmigen Polarisator, vorzugsweise eine Kombination aus einem linearen Polarisator und einer Viertelwellenplatte, umfasst.

8. Anzeigestapel (2), umfassend eine Anzeigetafel (6) und eine multifunktionale Folie (1) nach einem der Ansprüche 1 bis 7.

9. Anzeigestapel (2) nach Anspruch 8, wobei die multifunktionale Folie (1) eine von einer Deckschicht des Anzeigestapels (2) getrennte Schicht ist.

10. Anzeigestapel (2) nach Anspruch 8, wobei die multifunktionale Folie (1) in einer Deckschicht des Anzeigestapels (2) umfasst ist, wobei das Substrat (3) der multifunktionalen Folie (1) eine schützende Oberfläche des Anzeigestapels (2) bildet.

11. Anzeigestapel (2) nach einem der Ansprüche 8 bis 10, wobei die erste Oberfläche (3a) des multifunktionalen Films (1) konfiguriert ist, um einem Benutzer einer Vorrichtung, die den Anzeigestapel (2) umfasst, zugewandt zu sein, und die zweite Oberfläche (3b) des multifunktionalen Films (1) konfiguriert ist, um der Anzeigetafel (6) zugewandt zu sein.

12. Vorrichtung, umfassend den Anzeigestapel nach einem der Ansprüche 8 bis 11.

## Revendications

1. Film multifonctionnel (1) pour un empilement d'affichage (2), ledit film multifonctionnel (1) comprenant
- un substrat (3),
- un élément antireflet (4), et
- un élément polariseur (5), dans lequel
ledit élément antireflet (4) est agencé adjacent à une première surface (3a) dudit substrat (3), et dans lequel ledit élément antireflet (4) comprend une nanostructure, ladite nanostructure ayant une période inférieure à la longueur d'onde de la lumière visible, et
dans lequel ladite nanostructure comprend au moins l'un parmi une structure de nanopilier, nanofil, paraboloïdal, nanomamelon, nanodôme, nanocylindre, nanopyramide et en forme d'œil de mite,
le film multifonctionnel (1) étant **caractérisé en ce que**
ledit élément polariseur (5) et ledit élément antireflet (4) sont intégrés au sein dudit substrat (3), et
ledit élément polariseur (5) est agencé adjacent à une seconde surface (3b) dudit substrat (3), ladite seconde surface (3b) s'étendant en parallèle avec ladite première surface (3a),
ladite première surface (3a) et ladite seconde surface (3b) étant séparées par une première épaisseur (T1),
dans lequel ledit élément antireflet (4) est incorporé à l'intérieur dudit substrat (3) à une première distance (D1) de ladite première surface (3a), ladite première distance (D1) correspondant à un maximum de 1 % de ladite première épaisseur (T1), et/ou ledit élément polariseur (5) est incorporé à l'intérieur dudit substrat (3) à une seconde distance (D2) de ladite seconde surface (3b) correspondant à un maximum de 1 % de ladite première épaisseur (T1).

2. Film multifonctionnel (1) selon la revendication 1, dans lequel ledit substrat (3) est un substrat monobloc.

3. Film multifonctionnel (1) selon l'une quelconque des revendications précédentes, dans lequel ladite première distance (D1) et/ou ladite seconde distance (D2) est de 0 à 2 µm.

4. Film multifonctionnel (1) selon l'une quelconque des revendications précédentes, dans lequel ladite première épaisseur (T1) est de 100 à 650 µm, ledit élément antireflet (4) a une seconde épaisseur (T2) de 0,5 à 10 µm, et/ou ledit élément polariseur (5) a une troisième épaisseur (T3) de 0,5 à 10 µm.

5. Film multifonctionnel (1) selon l'une quelconque des revendications précédentes, dans lequel ledit substrat (3) comprend au moins l'un parmi le verre et le matériau polymère.

6. Film multifonctionnel (1) selon l'une quelconque des revendications précédentes, dans lequel ladite nanostructure comprend au moins l'un parmi SiO₂, TiO₂, PDMS, polymères à base de silicone. Si, GaN, Saphir, MgF₂/SiO₂, Ag, ZnO, et Au.

7. Film multifonctionnel (1) selon l'une quelconque des revendications précédentes, dans lequel ledit élément polariseur (5) comprend un polariseur circulaire, de préférence une combinaison d'un polariseur linéaire et d'une plaque quart d'onde.

8. Empilement d'affichage (2) comprenant un panneau d'affichage (6) et un film multifonctionnel (1) selon l'une quelconque des revendications 1 à 7.

9. Empilement d'affichage (2) selon la revendication 8, dans laquelle ledit film multifonctionnel (1) est une couche séparée d'une couche de recouvrement dudit empilement d'affichage (2).

10. Empilement d'affichage (2) selon la revendication 8, dans laquelle ledit film multifonctionnel (1) est compris dans une couche de recouvrement dudit empilement d'affichage (2), le substrat (3) dudit film multifonctionnel (1) formant une surface protectrice dudit empilement d'affichage (2).

11. Empilement d'affichage (2) selon l'une quelconque des revendications 8 à 10, dans lequel la première surface (3a) dudit film multifonctionnel (1) est conçue pour faire face à un utilisateur d'un appareil comprenant ledit empilement d'affichage (2), et la seconde surface (3b) dudit film multifonctionnel (1) est conçue pour faire face audit panneau d'affichage (6).

12. Appareil comprenant l'empilement d'affichage selon l'une quelconque des revendications 8 à 11.
